**Europäisches Patentamt**

**European Patent Office**

**Office européen des brevets**

(19)

(11) Veröffentlichungsnummer: **0 160 195**
**B1**

(12) ## EUROPÄISCHE PATENTSCHRIFT

(45) Veröffentlichungstag der Patentschrift:
**07.12.88**

(51) Int. Cl.⁴: **E 01 H 4/02**, G 01 S 15/88

(21) Anmeldenummer: **85103006.4**

(22) Anmeldetag: **15.03.85**

(54) **Vorrichtung zur Steuerung der Bewegungen der Planierwerkzeuge von Pistenpräparierfahrzeugen.**

(30) Priorität: **02.05.84 DE 3416246**

(43) Veröffentlichungstag der Anmeldung:
**06.11.85 Patentblatt 85/45**

(45) Bekanntmachung des Hinweises auf die Patenterteilung:
**07.12.88 Patentblatt 88/49**

(84) Benannte Vertragsstaaten:
**AT CH FR IT LI SE**

(56) Entgegenhaltungen:
**EP-A- 0 082 450**
**DE-A- 1 457 742**
**DE-A- 3 005 259**
**DE-A- 3 128 433**
**DE-B- 1 067 252**
**FR-A- 1 368 133**
**FR-A- 2 124 285**
**US-A- 4 122 429**

**PATENTS ABSTRACTS OF JAPAN, Band 7, Nr. 282**
**(P-243)[1427], 16. Dezember 1983**

(73) Patentinhaber: **Ski-Data Computerhandelsgesellschaft m.b.H., Berchtesgadner Strasse 8, A-5083 Gartenau - St. Leonhard (AT)**

(72) Erfinder: **Wallerstorfer, Kurt, Elsa Brandströmstrasse 4, A-5020 Salzburg (AT)**
Erfinder: **Kastlunger, Erich, I-39030 St. Virgil (IT)**

(74) Vertreter: **Haft, Berngruber, Czybulka, Postfach 14 02 46 Hans-Sachs-Strasse 5, D-8000 München 5 (DE)**

**Beschreibung**

Die Erfindung bezieht sich auf eine Vorrichtung zur Steuerung der Bewegungen der Planierwerkzeuge von Pistenpräparierfahrzeugen.

Mit Pistenpräparierfahrzeugen sollen Skipisten so hergerichtet werden, daß sie keine Buckel, vereiste Stellen und schneefreie Flächen aufweisen. Die Pistenpräparierfahrzeuge sind dazu mit einem Planierwerkzeug ausgerüstet, und zwar im allgemeinen mit einem an der Vorderseite angeordneten Planierschild, das mit dem Fahrzeug schwenkbar verbunden ist, wodurch die Vertikalbewegungen des Planierschildes gesteuert werden. Darüber hinaus ist im allgemeinen eine Verschwenkbarkeit des Planierschildes um eine horizontale Achse zur Steuerung des Anstellwinkels des Planierschildes gegenüber der Schneeoberfläche sowie eine Verschwenkbarkeit des Planierschildes um eine Vertikalachse vorgesehen.

Während bei der Präparierung einer ebenen Piste kaum Schwierigkeiten hinsichtlich der Steuerung der Bewegungen des Planierschildes auftreten, ergeben sich große Probleme bei der Ausrichtung des Planierschildes, wenn das Fahrzeug ein Gelände überfährt, das Buckel, abschüssige und ansteigende Strecken sowie Eisansammlungen unter der Schneeoberfläche aufweist.

Hier werden große Anforderungen an den die Steuereinrichtung für das Planierschild betätigenden Fahrer des Pistenpräparierfahrzeuges gestellt. In vielen Fällen ist es dabei unumgänglich, daß die Fahrgeschwindigkeit drastisch herabgesetzt wird, um die Bewegungen des Planierschildes steuern zu können.

Die Steuerung des Planierschildes wird nämlich insbesondere dadurch erschwert, daß die Auf- und Abbewegungen an der Stelle des Pistenpräparierfahrzeuges, an der das Planierschild verschwenkbar angelenkt ist, nach dem Hebelgesetz verstärkt auf das Planierschild übertragen werden.

Doch selbst bei verminderter Fahrgeschwindigkeit besteht noch eine erhebliche Gefahr, daß das Planierschild sich in den Untergrund, also den Boden oder die den Boden bedeckende Eisschicht, eingräbt. So sind heutzutage selbst sehr erfahrene Fahrer von Pistenpräparierfahrzeugen schätzungsweise ein Viertel der Zeit damit beschäftigt, Schäden auf der Skipiste, die durch Eingraben des Planierschildes in den Untergrund entstanden sind, wieder auszubessern. Ein derartiges Eingraben kann freilich auch Beschädigungen des Fahrzeuges sowie gefährliche Unfälle zur Folge haben.

Weiterhin treten meteorologisch bedingt innerhalb einer Saison erhebliche Schwankungen der Schneetiefe auf. Dies hat zur Folge, daß schneefreie Flächen auftreten können, die die Skipiste unbenutzbar machen. Wenn andererseits Schnee aus schneebedeckten Zonen der Skipiste mit einem Pistenpräparierfahrzeug zu einer solchen schneefreien Fläche geschoben wird, besteht die Gefahr, daß die Schneehöhe an der Stelle, an der der Schnee abgetragen wird, relativ gering ist und damit sofort oder bei Tauwetter nach kurzer Zeit eine neue schneefreie Stelle entsteht. Obwohl an sich auf der gesamten Skipiste noch genügend Schnee vorhanden wäre, um eine ausreichende Schneehöhe bei gleichmäßiger Schneeverteilung zu gewährleisten, muß also der Skibetrieb bereits eingestellt werden, wenn nur ein Bruchteil der Skipiste schneefrei ist.

Aus der europäischen Patentanmeldung mit der Veröffentlichungsnummer 0082450 ist eine Vorrichtung zur automatischen Steuerung des Planierschildes eines Pistenpräparierfahrzeuges bekannt. Dabei wird der Anstellwinkel des Planierschildes durch eine hydraulische Einrichtung in Abhängigkeit von den Schwenkbewegungen der Tragarme des Planierschildes so gesteuert, daß bei einer Bewegung der Tragarme nach unten bei einem Schneetal das Planierschild in der Weise ausgerichtet wird, daß es mit seiner konvexen Fläche auf dem Schnee aufliegt und sich damit nicht eingraben kann.

Die bekannte Vorrichtung ist jedoch nur bei einer im wesentlichen ebenen Piste in der gewünschten Weise funktionsfähig. Trifft beispielsweise das Planierschild auf einen ansteigenden Hang auf, so gräbt es sich ein, da mangels Verschwenkung der Tragarme nach oben beim Eingraben die angestrebte Ausrichtung des Planierschildes in die Lage, in der es mit seiner konvexen Fläche aufliegt, nicht eintritt.

Der Erfindung liegt demgegenüber die Aufgabe zugrunde, eine Vorrichtung zu schaffen, mit der die Steuerung der Planierwerkzeuge von Pistenpräparierfahrzeugen vereinfacht wird und die eine bessere Verteilung der auf der Skipiste vorhandenen Schneemenge ermöglicht.

Diese Aufgabe wird gemäß der Erfindung mit den im kennzeichnenden Teil des Anspruchs 1 bzw. 3 angegebenen Merkmalen gelöst.

Eine besonders sichere und problemlose Steuerung der Planierwerkzeuge, selbst bei relativ hoher Geschwindigkeit, wird erreicht, wenn die umgeformten Ausgangssignale unmittelbar der Einrichtung zur Steuerung des Planierwerkzeuges zugeführt werden.

Ausführungsbeispiele der Erfindung werden nachstehend anhand der Zeichnung erläutert. Es zeigt:

Figur 1 eine Draufsicht auf ein Pistenpräparierfahrzeug;

Figur 2 eine Anordnung zur Bestimmung der Schneetiefe und Schneeart mit Ultraschall;

Figur 3 die Wiedergabe einer Anzeige der Echos, die mit der Meßanordnung nach Figur 2 erhalten werden, auf einem Bildschirm;

Figur 4 eine Tafel zur Anzeige der Schneetiefe und Schneeart; und

Figur 5 einen Pistenabschnitt in der Draufsicht.

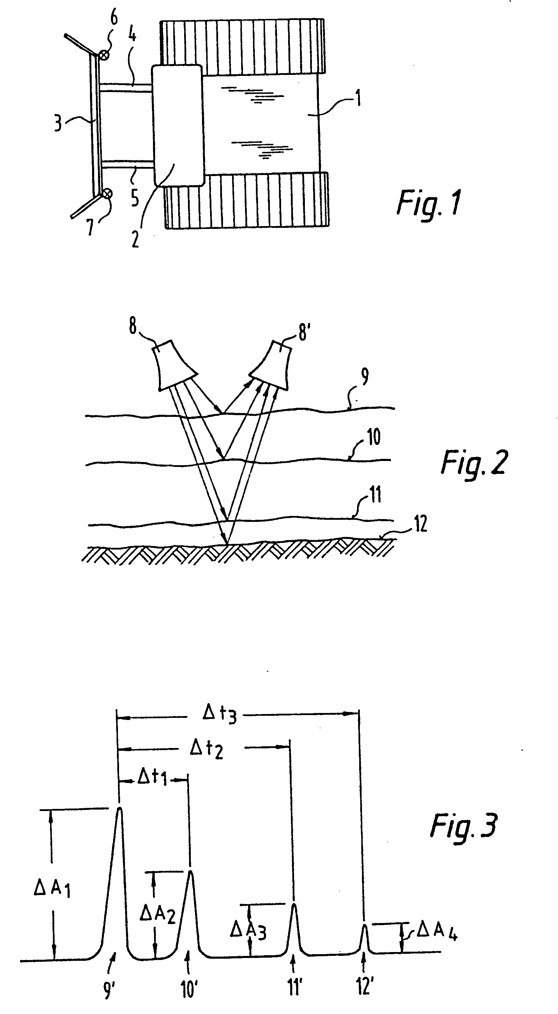

Gemäß Figur 1 weist ein als Vollkettenfahrzeug ausgebildetes Pistenpräparierfahrzeug 1 an der Vorderseite ein Fahrerhaus 2 sowie ein Planierschild 3 auf. Das Planierschild 3 ist an Tragarmen 4 und 5 befestigt, die an der Vorderseite des Pistenpräparierfahrzeuges 1 um eine waagrechte Achse verschwenkbar angelenkt sind. Eine weitere, in der Zeichnung nicht dargestellte Einrichtung ist zum Verschwenken des Planierschildes 3 um seine waagrechte Längsachse gegenüber den Tragarmen 4 und 5 vorgesehen, um den Anstellwinkel des Planierschildes 3 gegenüber der Pistenoberfläche einzustellen, ferner eine gleichfalls in der Zeichnung nicht dargestellte Einrichtung zum Verschwenken des Planierschildes 3 um eine senkrechte Achse.

Die verschwenkbaren Tragarme 4 und 5 sowie die Einrichtungen zur Einstellung des Anstellwinkels des Planierschildes 3 bzw. zur Verschwenkung des Planierschildes 3 um eine senkrechte Achse sind in herkömmlicher Weise ausgebildet und werden vorzugsweise hydraulisch betätigt, wobei die Steuerung durch den Fahrer mit einer im Fahrerhaus 2 vorgesehenen Steuereinrichtung erfolgt.

An den einander gegenüberliegenden Enden sind an der Rückseite des Planierschildes 3 des Pistenfahrzeuges 1 zwei elektrische Meßanordnungen 6 und 7 zur Bestimmung der Schneetiefe und gegebenenfalls Schneeart vorgesehen. Dabei wird vorzugsweise eine Ultraschall-Meßanordnung verwendet.

Eine solche Ultraschall-Meßanordnung ist in Figur 2 detaillierter wiedergegeben. Dabei ist ein Ultraschall-Sender 8 vorgesehen, von dessen Schallenergie jeweils ein Teil von der Neuschneeoberfläche 9, der Altschneeoberfläche 10, der Oberfläche 11 einer Eisschicht und der Bodenoberfläche 12 reflektiert wird. Die reflektierten Schallenergie-Anteile werden von einem Echo-Empfänger 8′ aufgenommen.

Es braucht kein separater Echo-Empfänger 8′ vorzuliegen. Vielmehr kann auch das Impulsecho-Verfahren angewendet werden, bei dem derselbe Quarz alternierend als Sender und Empfänger dient. Jedoch ist z.B. bei einer Frequenz der Ultraschall-Wellen von 30000 Hz oder weniger und einer Meßgenauigkeit von etwa 1 cm ein separater Echo-Empfänger vorzuziehen.

In Figur 3 sind die von dem Echo-Empfänger 8′ der Meßanordnung gemäß Figur 2 gemessenen Echos als Aufzeichnung auf einen Bildschirm wiedergegeben.

Dabei sieht man auf dem Bildschirm zunächst die Anzeige des Echos 9′ mit der Intensität $\Delta A_1$, das von der Reflexion an der Schneeoberfläche 9, herrührt, nach einer Laufzeit $\Delta t_1$ das Echo 10′, das der Oberfläche 10 der Altschneeschicht entspricht und eine Intensität $\Delta A_2$ aufweist, nach einer Laufzeit $\Delta t_2$ das Echo 11′ der Oberfläche 11 der Eisschicht mit einer Intensität $\Delta A_3$ und als letztes Echo nach einer Laufzeit $\Delta A_3$ das Bodenecho 12′ mit der Intensität $\Delta A_4$, das von der Reflexion an der Bodenoberfläche 12 stammt. Aus der jeweiligen Laufzeit $\Delta t_1$ kann die Dicke der Neuschneeschicht, aus der Laufzeit $\Delta t_2 - \Delta t_1$ die Dicke der Altschneeschicht, aus der Laufzeit $\Delta t_3 - \Delta t_2$ die Dicke der Eisschicht und aus der Laufzeit $\Delta t_3$ die Gesamttiefe der Schneeschicht, einschließlich der Eisschicht, bestimmt werden.

Weiterhin ist die Intensität $\Delta A_1$, $\Delta A_2$ und $\Delta A_3$ von dem Schallwellenwiderstand und damit von der jeweiligen Beschaffenheit des Neuschnees bzw. Altschnees bzw. der Eisschicht abhängig.

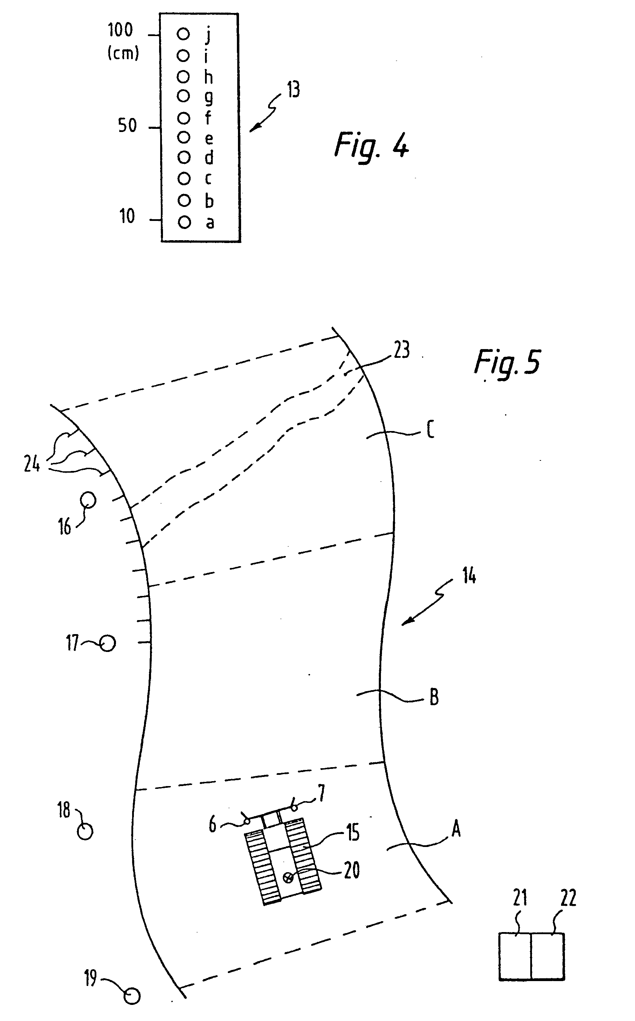

Die mit dem Echo-Empfänger 8′ erhaltenen, in Figur 3 auf einem Bildschirm wiedergegebenen Meßimpulse ($\Delta A_1$, $\Delta A_2$, $\Delta A_3$, $\Delta A_4$, $\Delta t_1$, $\Delta t_2$, $\Delta t_3$) werden einer Einrichtung zur Umformung der Meßimpulse zugeführt. Die Ausgangssignale dieser Umformungseinrichtung werden einer Anzeigeeinrichtung zugeführt, z.B. einer Tafel 13, wie sie in Figur 4 wiedergegeben ist. Dabei ist eine Reihe von beispielsweise zehn Leuchtpunkten a bis j vorgesehen, die jeweils einer Schneehöhendifferenz von 10 cm bei einer Gesamtschneehöhe von einem Meter entsprechen. D.h. es leuchten alle Leuchtpunkte a bis j auf, wenn die Schneehöhe einen Meter oder mehr beträgt, jedoch z.B. nur die Leuchtpunkte a bis c bei einer Schneehöhe von 30 bis 40 cm.

Gleichzeitig kann die Farbe der Leuchtpunkte a bis j so gesteuert werden, daß die Schneeart wiedergegeben wird, wobei z.B. Blau für Eis, Gelb für Altschnee und Grün für Neuschnee steht, so daß z.B. blaue Leuchtpunkte a bis c, ein gelber Leuchtpunkt d und grüne Leuchtpunkte e und f eine Eisschicht von 30 bis 40 cm, eine Altschneeschicht von 10 bis 20 cm und eine Neuschneeschicht von 20 bis 30 cm wiedergeben.

Anhand der von der Anzeigetafel 13 angezeigten Schneehöhe und Schneeart kann dann der Fahrer die im Fahrerhaus 2 vorgesehene Steuereinrichtung für das Planierschild 3 betätigen.

Statt der Anzeigetafel 13 können die Ausgangssignale der Umformungseinrichtung auch direkt der Steuereinrichtung für das Planierschild 3 im Pistenpräparierfahrzeug 1 zugeführt werden. Auf diese Weise werden die Bewegungen des Planierschildes 3 automatisch so gesteuert, daß bei gleicher Höhe der unteren Kante des Planierschildes über dem Untergrund, d.h. dem Erdboden und der gegebenenfalls darüber befindlichen Eisschicht, die Skipiste auf eine möglichst gleichmäßige Schneehöhe planiert wird.

Falls eine sehr harte Eisschicht vorliegt, kann das Bodenecho 12′ unter Umständen unter der Meßbarkeitsgrenze liegen. Dies ist jedoch nicht weiter nachteilig, da die Schneehöhe, auf die planiert werden soll, in aller Regel der Schneehöhe über der Eisschicht entspricht.

In Figur 1 ist je eine Schneetiefe- und gegebenenfalls Schneeart-Meßanordnung 6 und 7 links und rechts am Planierschild 3 angeordnet. Die von den Meßanordnungen 6 und 7 erhaltenen Meßimpulse können über die Umformungseinrichtung gemittelt der Anzeigetafel 13 bzw. unmittelbar der Steuereinrichtung für das Planierschild 3 zugeführt werden. Änderungen der Schneehöhe und gegebenenfalls Schneeart entlang des Planierschildes 3 werden dadurch ausgeglichen. Stattdessen kann auch nur ein Meßgerät vorzugsweise in der Mitte hinter dem Planierschild 3 angeordnet sein.

Falls der Anteil der von der Oberfläche 9 der obersten Schneeschicht reflektierten Schallenergie so groß ist, also die Intensität $\Delta A_1$ des Echos 9′, daß die darauffolgenden Intensitäten, und zwar insbesondere die Intensität der Reflexion der Eisschicht $\Delta A_3$ nur noch schwer meßbar sind, kann der Ultraschallsender 8 auch so angeordnet werden, daß er unmittelbar auf der Oberfläche 9 der obersten Schneeschicht aufliegt oder knapp unter der Schneeoberfläche 9 geführt wird, beispielsweise durch eine Anordnung des Ultraschallsenders 8 unterhalb der Unterkante des Planierschildes 3 oder auf einem Schlitten, der den Ultraschallsender 8 in Berührung mit der Schneeoberfläche führt.

Statt einer Ultraschall-Meßanordnung kann erfindungsgemäß auch eine andere elektrische Meßanordnung zur Bestimmung der Schneetiefe und gegebenenfalls -art und damit zur Steuerung der Bewegungen des Planierschildes 3 vorgesehen sein.

Beispielsweise kann magnetisches Material, wie Eisenspäne, auf den Erdboden der Piste aufgebracht und dann mit einem am Pistenpräparierfahrzeug 1 vorgesehenen Magnetometer die magnetische Feldstärke bestimmt werden, wobei die magnetische Feldstärke ein Maß für die Schneetiefe bildet. Auch ist die Aufbringung von radioaktivem Material auf den Erdboden der Skipiste denkbar, wobei am Pistenpräparierfahrzeug 1 ein Zählrohr vorgesehen ist, das die Intensität der radioaktiven Strahlung mißt, anhand der sich die Schneetiefe ermitteln läßt. Allerdings ist im Hinblick auf die einschlägigen Vorschriften, insbesondere den Umweltschutz eine Meßanordnung unter Verwendung radioaktiver Strahlung mehr als eine theoretische, als eine praktisch durchführbare Möglichkeit anzusehen.

Weiterhin kann eine solche elektrische Meßanordnung vorgesehen sein, bei der Radiowellen (UKW) verwendet werden. Dabei werden von einem Pistenpräparierfahrzeug 1 angeordneten Sender mit einem bestimmten Winkel schräg zur Schneeoberfläche UKW-Signale ausgesendet, vom Boden reflektiert und von einer am Pistenfahrzeug 1 angeordneten Antenne empfangen. Vorzugsweise ist eine Serie von Antennen am Pistenpräparierfahrzeug und ein fester Einfallswinkel der UKW-Signale bzw. des Reflexionswinkels vorgesehen, so daß aus dem Abstand zwischen Sender und der das UKW-Signal empfangenden Antenne die Schneehöhe bestimmbar ist. Als weitere Meßanordnung ist eine Meßanordnung mit einem Hochleistungs-Laser in Erwägung zu ziehen.

Bei der vorstehend beschriebenen Ausführungsform der Erfindung ist die Meßanordnung an dem Pistenpräparierfahrzeug 1 angeordnet, welches auch das zu steuernde Planierschild 3 trägt.

Stattdessen kann jedoch auch ein separates Pistenfahrzeug vorgesehen sein, das die Meßanordnung zur Bestimmung der Schneehöhe und gegebenenfalls Schneeart aufweist und die gemessenen Daten an ein Pistenpräparierfahrzeug bzw. einen Zug aus mehreren Pistenpräparierfahrzeugen übermittelt. Diese Ausführungsform der Erfindung ist nachstehend anhand der Figur 5 näher erläutert, die einen Abschnitt einer Skipiste 14 in der Draufsicht zeigt.

Dabei ist ein Pistenfahrzeug 15 vorgesehen, das die vorstehend näher geschilderte Meßanordnung zur Bestimmung der Schneehöhe und gegebenenfalls Schneeart trägt. Weiterhin ist zur Bestimmung des jeweiligen Standorts des die Skipiste 14 abfahrenden Pistenfahrzeuges 15 eine Ortungseinrichtung installiert.

Bei der Ortungseinrichtung kann es sich um eine Funkortungseinrichtung handeln, bei der Sender 16, 17, 18 und 19, die an der Skipiste 14 angeordnet sind, elektrische Wellen oder Funkfeuer aussenden, die von am Pistenfahrzeug 15 angeordneten Funkpeilern 20 empfangen werden oder es werden von am Pistenfahrzeug 15 befindlichen Sendern elektrische Wellen abgestrahlt und hier wiederum in Form eines reflektierten Signals empfangen.

Hierbei können im wesentlichen alle Verfahren und Vorrichtungen der Kurzstrecken-Funknavigation zum Einsatz kommen, z.B. das Richtempfangsverfahren, bei dem im Pistenfahrzeug 15 die Abhängigkeit der Antennenspannung von der Richtung der von den Sendern 16 bis 19 einfallenden elektrischen Wellen ausgenutzt wird, oder das Richtsendeverfahren, bei dem von den Sendern 16 bis 19 modulierte elektrische Wellen ausgesendet werden, wobei die Modulation die Richtungsinformation darstellt, ferner Radarverfahren, z.B. eine Radarsende- und Empfangseinrichtung am Pistenfahrzeug 15, wobei bestimmte markante Punkte an der Skipiste 14, z.B. ein Felsbrocken oder eine Bergkuppe, zur Ortung herangezogen werden.

Durch gleichzeitige Bestimmung der Schneetiefe und gegebenenfalls Schneeart einerseits und des Standortes des Pistenfahrzeuges 15 andererseits wird so durch das die Skipiste 14 abfahrende Pistenfahrzeug 15 eine Gesamtaufnahme oder kartografische Darstellung der Schneehöhe und gegebenenfalls Schneeart auf der gesamten Skipiste 14 erstellt.

Dazu werden Schneehöhe und Schneeart an jedem Standort des Pistenfahrzeuges 15 in einer Speicheranlage 21 abgespeichert. Die Speicheranlage 21 kann, wie in Figur 5 dargestellt, ortsfest installiert sein, wobei die von dem Pistenfahrzeug 15 ermittelten Daten z.B. per Funk an die Speicheranlage 21 übermittelt werden.

Die mit der Speicheranlage 21 gesammelten Daten werden dann von einer Rechenanlage 22 für die gesamte Skipiste 14 ausgewertet. Die von der Rechenanlage 22 errechneten Daten werden nun an die Pistenpräparierfahrzeuge weitergegeben, die in Figur 5 nicht dargestellt sind.

Ist beispielsweise ermittelt worden, daß im Durchschnitt die Zone A der Skipiste 14 eine Schneehöhe von 0,75 Metern, die Zone B eine Schneehöhe von 0,50 Metern und die Zone C eine Schneehöhe von 1,00 Metern aufweist, so haben die Pistenpräparierfahrzeuge im Durchschnitt 0,25 Meter Schnee von der Zone C abzutragen und damit die Zone B aufzufüllen, um eine im wesentlichen gleichmäßige Schneehöhe von 0,75 Metern auf der Skipiste 14 zu erhalten, falls die Zonen C und B gleich groß sind.

Selbstverständlich können die Pistenpräparierfahrzeuge ihrerseits jeweils mit Meßanordnungen zur Bestimmung der Schneehöhe und gegebenenfalls Schneeart ausgerüstet sein, wie in Figur 1 dargestellt, um Unterschieden in der Schneehöhe innerhalb der einzelnen Zonen A, B und C Rechnung zu tragen, z. B. einem vereisten Bach 23, der sich unterhalb der Schneedecke über die Skipiste 14 erstreckt.

Die Steuerung der Bewegungen des Planierschildes 3 der Pistenpräparierfahrzeuge 1 entsprechend den von der Rechenanlage übermittelten Daten kann manuell erfolgen, wobei am Pistenrand in regelmäßigen Abständen Markierungen 24 vorgesehen sein können, nach denen sich die Fahrer der Pistenpräparierfahrzeuge 1 orientieren. Stattdessen können diese Daten auch unmittelbar der Steuereinrichtung zur Betätigung des Planierschildes 3 der einzelnen Pistenpräparierfahrzeuge 1 zugeführt werden, d.h. es kann eine automatische Steuerung erfolgen.

Das Planierschild kann im übrigen auch an der Rückseite des Pistenpräparierfahrzeuges 1 vorgesehen sein. Weiterhin kann als Planierwerkzeug eine Schneefräse am Pistenpräparierfahrzeug 1 angeordnet sein, wobei letztere bei hartem Schnee, z.B. künstlich erzeugtem Schnee bevorzugt verwendet wird.

## Patentansprüche

1. Vorrichtung zur Steuerung der Bewegungen der Planierwerkzeuge von Pistenpräparierfahrzeugen, dadurch gekennzeichnet, daß an dem Pistenpräparierfahrzeug (1) eine elektrische Meßanordnung (6, 7) zur Bestimmung der Schneetiefe und gegebenenfalls Schneeart und eine Einrichtung zur Umformung der erhaltenen Meßimpulse vorgesehen sind, deren Ausgangssignale einer Anzeigevorrichtung (13) und/oder unmittelbar einer Einrichtung zur Steuerung der Bewegung des Planierwerkzeugs (3) des Pistenpräparierwerkzeugs (1) zugeführt werden.

2. Vorrichtung nach Anspruch 1, dadurch gekennzeichnet, daß die elektrische Meßanordnung (6, 7) am Planierwerkzeug (3) angeordnet ist.

3. Vorrichtung zur Steuerung der Bewegungen der Planierwerkzeuge von Pistenpräparierfahrzeugen, dadurch gekennzeichnet, daß eine elektrische Meßanordnung (6, 7) zur Bestimmung der Schneetiefe und gegebenenfalls Schneeart an einem die Skipiste (14) abfahrenden Pistenfahrzeug (15), eine Ortungseinrichtung (16 bis 20) zur Bestimmung des jeweiligen Standorts des die Skipiste (14) abfahrenden Pistenfahrzeuges (15), und eine Speicher- und Rechenanlage (21, 22), der die mit der Meßanordnung (6, 7) erhaltenen Meßimpulse zusammen mit dem von der Ortungseinrichtung (16 bis 20) bestimmten jeweiligen Standort des Pistenfahrzeuges (15) zugeführt werden und die für jeden Standort der gesamten präparierenden Fläche der Skipiste (14) die optimale Schneehöhe anhand der eingegebenen Daten ermittelt und deren Ausgangssignale einer Anzeigevorrichtung und/oder unmittelbar einer Einrichtung zur Steuerung der Bewegung des Planierwerkzeuges (3) des oder der Pistenpräparierfahrzeuge (1) zugeführt werden.

4. Vorrichtung nach Anspruch 3, dadurch gekennzeichnet, daß die Ortungseinrichtung (16 bis 20) eine Funknavigationseinrichtung ist.

5. Vorrichtung nach einem der Ansprüche 1 bis 4, dadurch gekennzeichnet, daß die elektrische Meßanordnung (6, 7) eine Ultraschall-Meßanordnung (8, 8') ist.

## Claims

1. An apparatus for controlling the movements of the levelling tools of ski track grooming vehicles, characterized in that the grooming vehicle (1) bears an electrical measuring assembly (6, 7) for determining the depth of the snow and optionally the type of snow, and a means for converting the obtained measuring pulses, whose output signals are fed to a display means (13) and/or directly to a means for controlling the movements of the levelling tool (3) of the grooming vehicle (1).

2. An apparatus according to claim 1, characterized in that the electrical measuring assembly (6, 7) is disposed on the levelling tool (3).

3. An apparatus for controlling the movements of the levelling tools of ski track grooming vehicles, characterized by an electrical measuring assembly (6, 7) for determining the depth of the snow and optionally the type of snow on a track vehicle (15) moving along the ski track (14), a locating means (16 to 20) for determining the particular location of the track vehicle (15) moving along the ski track (14), and a memory and computing system (21, 22) which is fed the measuring pulses obtained by the measuring assembly (6, 7) together with the particular location of the track vehicle (15) detected by the locating means (16 to 20), and which determines on the basis of the inputted data the optimum snow height for each location of the total surface of the ski track (14) to be groomed, and whose output signals are fed to a display means and/or directly to a means for controlling the movement of the levelling tool (3) of the grooming vehicle or vehicles (1).

4. An apparatus according to claim 3, characterized in that the locating means (16 to 20) is a radio navigation means.

5. An apparatus according to any of claims 1 to 4, characterized in that the electrical measuring assembly (6, 7) is an ultrasonic measuring assembly (8, 8').

## Revendications

1. Dispositif de réglage des mouvements de la niveleuse d'un véhicle de préparation des pistes, caractérisé en ce qu'il est prévu, sur le véhicule de préparation des pistes (1), un dispositif de mesure électrique (6, 7) pour déterminer la profondeur de la neige et, éventuellement, le type de neige ainsi qu'un dispositif de transformation des impulsions de mesure obtenues dont les signaux de départ sont amenés à un dispositif indicateur (13) et/ou directement à une installation de réglage du mouvement de la niveleuse (3) du véhicule de préparation des pistes (1).

2. Dispositif selon la revendication 1, caractérisé en ce que le dispositif de mesure électrique (6, 7) est disposé sur la niveleuse (3).

3. Dispositif de réglage des mouvements de la niveleuse d'un véhicule de préparation de pistes, caractérisé par un dispositif de mesure électrique (6, 7) pour déterminer la profondeur de la neige et éventuellement le type de neige sur un véhicule de pistes (15) parcourant la piste de ski (14), une installation de localisation (16 à 20) pour la détermination de l'emplacement momentané du véhicule de piste (15) parcourant la piste de ski (14) et une installation de mémorisation et de calcul (21, 22) à laquelle sont amenés les impulsions de mesure provenant du dispositif de mesure (6, 7) en même temps que l'emplacement momentané du véhicule de piste (15) déterminé par l'installation de localisation (16 à 20) et qui détermine, à l'aide des données fournies, la hauteur de neige optimale pour chaque localisation de la surface totale de la piste de ski (14) à préparer et dont les signaux de sortie sont amenés à un dispositif d'affichage et/ou directement à un dispositif de commande du mouvement de la niveleuse (3) du ou des véhicules (1) de préparation des pistes.

4. Dispositif selon la revendication 3, caractérisé en ce que l'installation de localisation (16 à 20) est une installation de radio-navigation.

5. Dispositif selon l'une quelconque des revendications 1 à 4, caractérisé en ce que le dispositif de mesure électrique (6, 7) est un dispositif de mesure à ultrasons (8, 8').

Fig. 1

Fig. 2

Fig. 3

Fig. 4

Fig. 5